# EUROPEAN PATENT SPECIFICATION

(11) **EP 0 448 880 B1**
(45) Date of publication and mention of the grant of the patent: **01.03.1995**
(21) Application number: 90314235.4
(22) Date of filing: 24.12.1990
(51) Int. Cl.: B01D 53/04

(54) **Process and apparatus for recovering hydrocarbons from air-hydrocarbon vapor mixtures**
Verfahren und Vorrichtung zur Wiedergewinnung von Kohlenwasserstoffen aus Luft-Kohlenwasserstoffdampfmischungen
Procédé et dispositif pour la récupération des hydrocarbures des mélanges de l'air et des vapeurs d'hydrocarbures

(30) Priority: 29.03.1990 US 501118
(43) Date of publication of application: 02.10.1991
(73) Proprietor: JOHN ZINK COMPANY, Tulsa, Oklahoma 74103 (US)
(72) Inventor: Dinsmore, Harold L., Tulsa, Oklahoma 74137 (US); Lishnevsky, Michael I., Tulsa, Oklahoma (US); Tuttle, Willard N., Tulsa, Oklahoma 74104 (US)
(74) Representative: Allen, William Guy Fairfax

(56) References cited:
- EP-A- 0 022 315
- US-A- 4 066 423

## Description

The present invention relates to a process and apparatus for recovering hydrocarbons from air-hydrocarbon vapor mixtures.

In handling multi-component and single component hydrocarbon liquids such as gasoline, kerosene, benzene and the like, air-hydrocarbon vapor mixtures are readily produced which cannot be vented directly to the atmosphere due to the resulting pollution of the environment and fire and/or explosion hazard. Consequently, a variety of processes and apparatus have been developed and used for removing hydrocarbon vapors from such air-hydrocarbon vapor mixtures whereby the remaining air can be safely vented to the atmosphere. The removed hydrocarbon liquid from which they were vaporized thereby making their recovery economically advantageous.

One such process is disclosed in US-A-4066423, in which the air-hydrocarbon vapor mixture is passed through a bed of solid adsorbent having an affinity for hydrocarbons, whereby a major portion of the hydrocarbons are adsorbed on the bed and a residue gas stream produced is of substantially hydrocarbon-free air. While a first bed of solid adsorbent is adsorbing hydrocarbons from the mixture, a second bed of solid adsorbent is regenerated by evacuation. The completeness of the regeneration of the solid adsorption beds of the process is dependent solely on the degree of vacuum produced in the beds by the vacuum pump utilized. Because vacuum pumps are incapable of achieving total vacuum, i.e., lowering the absolute pressure exerted on the beds to zero, a quantity of hydrocarbons are left adsorbed which reduces the capacity of the beds to adsorb additional hydrocarbons and reduces the service life of the adsorbent.

The hydrocarbon-rich air-hydrocarbon mixture produced as a result of the regeneration of the bed is contacted with a liquid absorbent whereby hydrocarbons are removed therefrom and the residue gas stream from the absorption step is recycled to the bed through which the inlet air-hydrocarbon mixture is flowing. As disclosed the liquid absorbent utilized is liquid hydrocarbons condensed from the air-hydrocarbon vapor mixture produced in the evacuation regeneration step. More specifically, the hydrocarbon-rich air-hydrocarbon vapor mixture is cooled whereby portions of the hydrocarbons are condensed and such condensed hydrocarbons are circulated into contact with the remaining air-hydrocarbon vapor mixture whereby hydrocarbon vapors are absorbed by the liquids.

Numerous other hydrocarbon recovery and treatment processes and apparatus have been developed and used and solid adsorbent for removing hydrocarbons from air-hydrocarbon vapor mixtures, regeneration of the adsorbent is incomplete whereby hydrocarbons are left on the adsorbent reducing the capacity, efficiency and service life thereof.

All of the prior art processes described above as well as the process of the present invention can be utilized in applications where the hydrocarbons to be recovered are mixed with inert gases other than air, e.g., nitrogen. Therefore, it is to be understood that while for convenience, the inert gas-hydrocarbon mixtures described in connection with the present invention are referred to as air-hydrocarbon vapor mixtures, the present invention is equally applicable to other inert gas-hydrocarbon vapor mixtures.

As various government regulatory agencies have enacted and enforced emission regulations applicable to petroleum product transfer operations, it has been recognized that it is appropriate and fair to state the allowable level of hydrocarbon emissions into the atmosphere to the volume of liquid transferred. Beginning in the late 1970's and continuing until August 1983, the United States Environmental Protection Agency (EPA) hydrocarbon vapor emission standard for gasoline bulk terminals was to allow 80 mg/l of hydrocarbon vapor to be emitted per litre of gasoline product transferred. In August 1983, the EPA revised the emission standard down to 35 mg/l. Since then, various air quality regulatory agencies have enacted even more stringent regulations, with some regions of California down to 10 mg/l. Current regulations applicable for marine transfer operations involving gasoline and crude oil in the San Francisco Bay area of California, limit the level to 5.7 mg/l. Furthermore, it is anticipated that these allowable emission standards will continue to become more and more stringent. It is expected that many countries in Europe will be required to comply with the proposed German standard which will only allow 0.15 mg/l.

The prior art carbon adsorption/absorption processes and systems which are based on the use of liquid ring vacuum pumps combined with air purge for carbon bed regeneration, have been shown to be capable of complying with allowable emission regulations of 10 mg/l or higher. Under low capacity utilization, they have demonstrated emission performance in the 1 to 10 mg/l range but under unusual circumstances which can not be obtained consistently.

The systems presently being used are limited by the liquid ring vacuum pumps utilized to the level of vacuum that can be obtained thereby to regenerate the adsorbent beds. Generally this vacuum level is limited by the vapor pressure of the liquid seal fluid required to make the vacuum pump work. Practical vacuum levels that can be achieved by this type of vacuum pump correspond to absolute pressure levels of between 50 and 100 millimeters (mm) of mercury (Hg) (1mm Hg = 133 Pa). This limitation of vacuum limits the degree to which the carbon beds can be regenerated and therefore limits the hydrocarbon vapor recovery efficiency.

EP-A-0022315 discloses an improved process for recovering hydrocarbons from an inlet air-hydrocarbon vapor mixture comprising the steps of:-
a flowing said inlet mixture through a first bed of solid adsorbent having an affinity for hydrocarbons whereby hydrocarbons are adsorbed on said bed and a residue gas stream comprised of substantially hydrocarbon-free air is produced;
b venting said substantially hydrocarbon-free air;
c evacuating a second bed of solid adsorbent having hydrocarbons adsorbed thereon by vacuum pumping with a liquid seal vacuum pump whereby a major portion of said hydrocarbons are desorbed from said bed and a hydrocarbon-rich air-hydrocarbon vapor mixture is produced from said second bed;
d further evacuating said second bed by vacuum pumping with an additional pump connected upstream and in series with said liquid seal vacuum pump while continuing to pump with said liquid seal vacuum pump whereby additional hydrocarbons are desorbed from said bed;
e removing a major portion of the hydrocarbons contained in the air-hydrocarbon vapor mixture produced in steps c and d therefrom whereby a residue gas stream comprised of air and a minor portion of hydrocarbons is produced;
f combining said residue gas stream produced in step e with said inlet air-hydrocarbon mixture of step a whereby hydrocarbon contained therein are adsorbed on said first bed of solid adsorbent;
g introducing a quantity of hydrocarbon-free purge air into said second bed while evacuating said bed whereby additional hydrocarbons are stripped from said bed and additional air-hydrocarbon mixture produced; and
h periodically changing the flow pattern of said inlet air-hydrocarbon mixture and changing the bed of solid adsorbent being evacuated whereby when the bed through which the inlet air-hydrocarbon mixture is flowing becomes loaded with adsorbed hydrocarbons, the inlet air-hydrocarbon mixture is caused to flow through the bed which has just been evacuated and stripped.

While this provides some advantages, the results are not adequate.

The present invention is characterised in that said continuously operating rotary blower works as said additional pump and in that during step c the valve in the bypass conduit for the additional pump is open and the vacuum in the second bed is created by the liquid seal pump alone.

By the present invention, an improved process and apparatus is provided which allows significantly better desorption of the carbon bed to be achieved, because of the bigger volume flow combined with high vacuum air purge. Thus far greater carbon bed regeneration and, as a result, significantly lower emission levels are obtained, i.e., levels equal to or lower than even the most stringent regulation (German) of 0.15 mg/l proposed for gasoline transfer operations.

In order that the present invention may more readily be understood, the following description is given, merely by way of example, reference being made to the accompanying drawings in which:-
Figure 1 is a schematic illustration of one embodiment of apparatus of the present invention for carrying out the process of the invention;
Figure 2 is a schematic illustration of a second embodiment of apparatus of the invention; and
Figure 3 is a schematic illustration of a third embodiment of apparatus for carrying out a modified process of the invention.

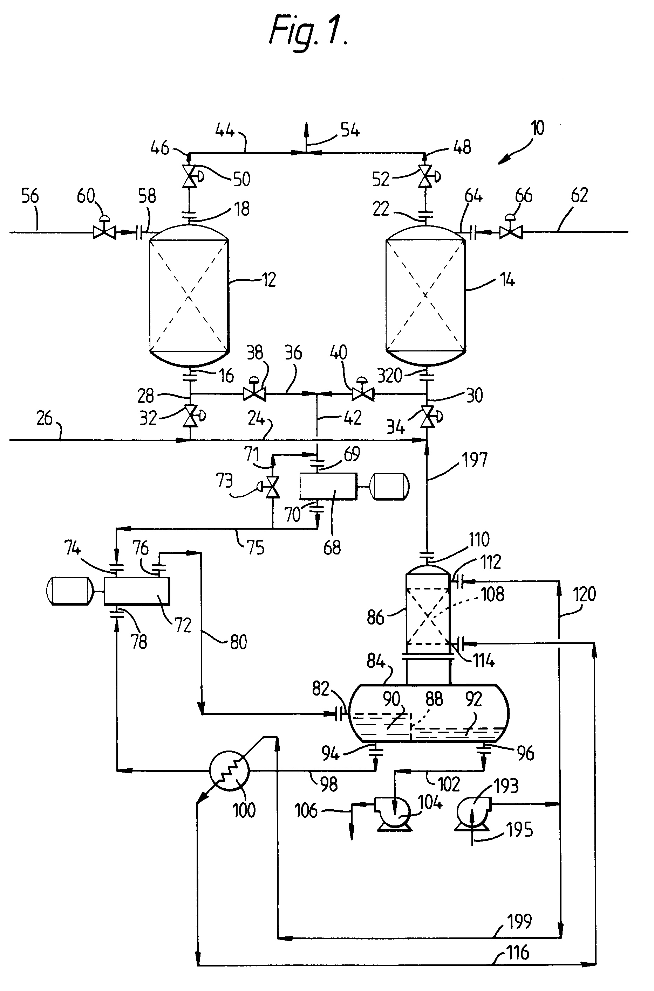

Referring to Figure 1, the apparatus generally designated 10 comprises a pair of adsorbers 12,14, each of which contains a bed of solid adsorbent through which gases can flow. Adsorber 12 includes inlet and outlet connections 16,18 and the adsorber 14 includes inlet and outlet connections 20,22. While various solid adsorbents having an affinity for hydrocarbons can be utilized in the adsorbers 12,14, activated carbon is preferred in that it is particularly suitable for adsorbing light hydrocarbon vapors of the type found in air-hydrocarbon vapor mixtures and for vacuum regeneration.

An air-hydrocarbon vapor mixture inlet header 24 is provided connected to a conduit 26 which conducts a mixture of air and multi-component hydrocarbon vapor, e.g., gasoline or kerosene vapor, from a source thereof to the apparatus 10. A pair of conduits 28,30 are connected to the header 24 and to the connections 16,20 of the adsorbers 12,14, respectively. Conventional switching valves 32,34 are disposed in the conduits 28,30, respectively, and a header 36 is connected to the conduits 28,30 at points thereon between the switching valves 32,34 and the connections 16,20 of the adsorbers 12,14. A pair of switching valves 38,40 are disposed in the header 36, and a conduit 42 is connected to the header 36 at a point between the switching valves 38,40.

A residue gas header 44 is provided, and a pair of conduits 46,48 are connected to the header 44 and to the connections 18,22 of the adsorbers 12,14. Switching valves 50,52 are disposed in the conduits 46,48, respectively, and a conduit 54 is connected to the header 44 for venting substantially hydrocarbon free residue gas to the atmosphere.

Conduits 56,62 connected to a source or sources (not shown) of stripping air or other inert gas, which can optionally be heated, are connected to stripping air inlet connections 58,64 in the adsorbers 12,14. Switching valves 60,66 are disposed in the conduit 56,62.

The other end of the conduit 42 connected to the header 36 is connected to the suction connection 69 of a positive displacement booster pump 68. The booster pump 68 is preferably a rotary blower of the lobed rotor design. An example of a particularly suitable rotary blower is the lobed rotor booster pump manufactured and sold by the M-D Pneumatics Division of the Tuthill Corporation, Springfield, Missouri. The discharge connection 70 of the booster pump 68 is connected to a conduit 75. A bypass conduit 71 is disposed around the booster pump 68 and is connected to the conduits 42,75. A switching valve 73 is disposed in the bypass conduit 71.

The primary vacuum pump utilized is a conventional liquid seal vacuum pump, also known as a liquid ring vacuum pump. Liquid seal vacuum pumps are capable of producing high vacuums, are relatively inexpensive and are much safer than other types of vacuum pumps. A liquid seal vacuum pump utilizes a seal liquid which is circulated through the pump. The seal liquid can be confined in a closed circuit and cooled whereby the pump is continuously cooled and the gas or gases flowing through the pump are also cooled. The presence of the seal liquid in the pump minimizes the possibility of explosions since the gas cannot approach its auto-ignition temperature nor can sparking occur due to mechanical failures within the pump.

A liquid seal vacuum pump 72 having a suction connection 74 to which the conduit 75 is attached, a discharge connection 76 and a seal liquid inlet connection 78 for returning seal liquid thereto is provided. A conduit 80 is connected to the discharge connection 76 of the pump 72 and to an inlet connection 82 of a separator 84. Absorber 86 can be integrally connected to the top of the separator 84, or they can be separate vessels.

The separator 84 is a three phase separator capable of separating the seal liquid utilized for the pump 72, condensed hydrocarbons and an air-hydrocarbon vapor mixture from each other. The separator 84 includes a chamber for accumulating separated condensed hydrocarbon liquids and hydrocarbon-rich liquid absorbent entering the separator 84 from the absorber 86, whereby such liquids are removed from the separator 84 in a combined state. More specifically, the separator 84 includes a weir 88 which divides the separator into compartments 90,92. The seal liquid and condensed hydrocarbon liquids entering the separator 84 by way of the inlet connection 82 are separated from the air-hydrocarbon vapor mixture in compartment 90. The seal liquid is heavier than the condensed hydrocarbon liquids and is immiscible therewith, and consequently, the seal liquid accumulates in the bottom of compartment 90 from where it is removed by way of a seal liquid outlet connection 94 attached to the separator 84. Condensed hydrocarbon liquids accumulating in compartment 90 spill over the top of the weir 88 into compartment 92. Hydrocarbon-rich liquid absorbent from the absorber 86 enters compartment 92 by way of the open bottom of the absorber 86 connected to the top of the separator 84 and also accumulates in compartment 92. The rich liquid absorbent-condensed hydrocarbon liquids mixture is removed from the separator 84 by way of an outlet connection 96. The separated air-hydrocarbon vapor mixture passes from the separator 84 into the absorber 86 by way of the connection therebetween.

A conduit 98 is connected to the seal liquid outlet connection 94 of the separator 84 and to the seal liquid inlet connection 78 of the pump 72. A cooler 100 is disposed in the conduit 98 for cooling the seal liquid as it flows therethrough. In certain situations a seal fluid circulation pump can be disposed in the conduit 98 between the separator 84 and the cooler 100. While the cooler 100 can be of various types and designs, a heat exchanger which cools the seal liquid by passing it in heat exchange relationship with a stream of lean liquid is used as the absorption medium in the absorber 86 is preferred and is generally the most economical.

A conduit 102 is connected to the connection 96 of the separator 84 and to a pump 104. The discharge connection of the pump 104 is connected to a conduit 106 which leads the rich liquid absorbent-condensed hydrocarbon liquids mixture to a storage facility (not shown).

The absorber 86 includes means for bringing about intimate contact between a liquid absorbent flowing downwardly therein and a vapor mixture flowing upwardly. Such means may comprise vapor-liquid contact trays or any of a variety of conventional packing material. Preferably, the absorber 86 includes a section of packing material 108 disposed in the top portion thereof for bringing about the intimate contact. A residue gas outlet connection 110 and a lean liquid absorbent inlet connection 112 are provided about the packed section 108. The mixture of air and hydrocarbon vapor separated in the separator 84 flows upwardly to the open bottom of the absorber into contact with the liquid absorbent flowing downwardly therein whereby hydrocarbons are absorbed and removed from the vapor mixture and a residue gas stream comprising air and a minor portion of hydrocarbons is produced.

A conduit 120 is connected to the lean liquid absorbent inlet 112 of the absorber 86 and to the discharge connection of a pump 193. A conduit 195 is connected to the suction connection of the pump 193, which leads a stream of lean liquid absorbent from a source such as a storage tank, to the pump 193. As indicated above, a conduit 199 can be provided to connect conduit 120 with cooler 100 whereby a slip stream of lean liquid absorbent flows to an inlet connection 114 in the absorber 86 by way of a conduit 116.

An exchanger (not shown) can be disposed in conduit 120 for cooling the lean liquid absorbent with an appropriate cooling medium such as cooling water, refrigerant, etc., should it be too warm to use as the heat exchanger coolant.

The residue gas stream produced in the absorber 86 exits the absorber by way of the connection 110 thereof and flows into a conduit 197 connected thereto and connected to the inlet air-hydrocarbon vapor header 24.

The switching valves 32,34,38,40,50,52,60,66 and 73 can be operated manually, but are preferably automatically operated valves which are controlled by a conventional cycle controller. The length of each cycle, i.e., the period of time between when the switching valves are operated can be controlled by a timer or other instrument sensing one or more variables in the operation of the apparatus 10, such as the degree of vacuum achieved in the adsorbent bed being regenerated, the composition of the gas stream being vented to the atmosphere etc.

In a typical operation of the apparatus 10, the switching valves 32,34,38,40,50 and 52 are operated in a manner whereby the inlet air-hydrocarbon vapor mixture is caused to flow through one of the adsorbers 12 or 14 while the other of the adsorbers is being regenerated.

For example, during a first cycle, the switching valve 32 is open and the switching valve 34 closed whereby the inlet air-hydrocarbon vapor mixture flows into the adsorber 12 by way of the conduit 28, switching valve 32 and connection 16 of the adsorber 12. The switching valve 50 disposed in the conduit 46 is open and the switching valve 52 disposed in the conduit 48 is closed whereby the residue gas stream produced in the adsorber 12 exits the adsorber 12 by way of the connection 18 thereof, through the conduit 46 and the switching valve 50 and enters the header 44. From the header 44, the residue gas stream flows through the conduit 54 and is vented to the atmosphere. The switching valve 38 disposed in the header 36 is closed, and the switching valve 40 disposed therein is open whereby the adsorbent bed within the adsorber 14 is communicated by way of the conduit 42 with the booster pump 68, and by way of the conduit 75 with the suction connection 74 of the liquid seal vacuum pump 72. The switching valve 66 disposed in the conduit 62 is initially closed and the switching valve 73 in the bypass conduit 71 is initially open.

Simultaneously, the bed of adsorbent disposed within the adsorber 14 is evacuated by the liquid seal vacuum pump whereby hydrocarbons are desorbed therefrom. A hydrocarbon-rich air-hydrocarbon vapor mixture is withdrawn from the adsorbent bed within the adsorber 14. Cooled seal liquid, preferably water or a mixture of water and a substance which functions as a antifreeze agent in the winter and as an agent to lower seal fluid vapor pressure in the summer, e.g., ethylene glycol, flows into the vacuum pump 72 by way of the connection 78 thereof and is discharged by way of the discharge connection 76 with the air-hydrocarbon vapor mixture. The intimate contact of the air-hydrocarbon vapor mixture with the cool seal liquid while flowing through the vacuum pump 72 cools the vapor mixture and causes some of the hydrocarbons contained therein to be condensed. Thus, a stream of air-hydrocarbon vapor mixture containing both seal liquid and condensed hydrocarbons exits the pump 72 and flows through the conduit 80 into the separator 84. While passing through the separator 84, the air-hydrocarbon vapor mixture, seal liquid and condensed hydrocarbon liquids are separated from each other. As previously described, the separated seal liquid flows from the separator 84 by way of the connection 94, the conduit 98 and the cooler 100 back into the liquid seal vacuum pump 72. Thus, the seal liquid is continually circulated while the pump 72 is operating.

The separated condensed hydrocarbons spill over the weir 88 and flow into compartment 92 of the separator 84 where they combine with rich liquid adsorbent flowing into compartment 92 from the absorber 86 and removed therefrom by way of the connection 96, the conduit 102 and the pump 104. From the pump 104, the rich liquid absorbent-condensed hydrocarbon liquids mixture is conducted by way of the conduit 106 to storage facilities or a point of further processing (not shown).

A stream of lean liquid absorbent is pumped from a source by the pump 193 and flows by way of the conduit 195, conduit 120 and connection 112 into the absorber 86. The lean liquid absorbent flows downwardly within the absorber 86 through the packed section 108 thereof and intimately contacts the separated air-hydrocarbon mixture flowing upwardly therethrough from the separator 84. As the air-hydrocarbon vapor mixture is contacted by the liquid absorbent, hydrocarbons are absorbed by the liquid absorbent and removed from the vapor mixture, whereby a residue gas stream comprised of air and a minor portion of hydrocarbons is produced. The residue gas stream exits the absorber 86 by way of the connection 110 thereof and flows by way of the conduit 197 into the header 24 where it combines with the inlet air-hydrocarbon vapor mixture and flows through the adsorber 12. The hydrocarbons contained in the residue gas stream are adsorbed on the bed of adsorbent within the adsorber 12 along with hydrocarbons from the inlet air-hydrocarbon vapor mixture.

In the embodiment illustrated in Figure 1, the booster pump 68 operates continuously but because the valve 73 in the bypass conduit 71 is open during the initial part of each cycle, the booster pump 68 is unloaded and the vacuum is created in the adsorber 14 by the liquid seal vacuum pump 72 alone. During a latter portion of the regeneration cycle, the switching valve 73 in the bypass conduit 71 is closed. The closing of the switching valve 71 loads the booster pump 68 causing an additional suction to that produced by the liquid seal vacuum pump 72. This is exerted on the bed of adsorbent within the adsorber 14 thereby creating a deeper vacuum than that created by the liquid seal pump 72 alone thereby further evacuating the adsorber 14 and causing additional hydrocarbons to be desorbed therefrom.

During the last part of the cycle, after a major portion of hydrocarbons adsorbed on the bed of adsorbent within the adsorber 14 have been desorbed therefrom by the operation of the liquid seal vacuum pump 72 and the booster pump 68 the switching valve 66 in the conduit 62 is opened whereby a quantity of hydrocarbon free stripping air flows by way of the conduit 62, switching valve 66 and the connection 64 of the adsorber 14 into the adsorber 14. While a high vacuum is maintained, the stripping air flows through the bed of adsorbent contained in the adsorber 14 and is withdrawn therefrom by the booster pump 68 and the liquid seal vacuum pump 72 as previously described. The introduction of a quantity of stripping air into the adsorbent bed contained within the adsorber 14 functions to strip additional hydrocarbons from the bed which were not desorbed therefrom by vacuum pumping, i.e., by the lowering of the pressure exerted on the bed to the degree of vacuum achieved by the combined pumping of the booster pump 68 and the liquid seal vacuum pump 72.

Thus, the combination of initially evacuating the adsorber 14 by vacuum pumping with the liquid seal vacuum pump 72, further evacuating the adsorbent bed by loading the booster pump 68 and then stripping the adsorbent bed brings about the regeneration of the adsorbent bed to a greater degree than is possible by liquid seal vacuum pumping alone. This more complete regeneration of the bed increases the capacity of the bed to adsorb additional hydrocarbons, increases the overall hydrocarbon recovery efficiency of the apparatus 10, increases the service life of the adsorbent and, if desired, produces a substantially hydrocarbon free residue air of lower hydrocarbon content.

After the adsorbent bed within the adsorber 14 has been fully regenerated and the adsorbent bed within the adsorber 12 loaded with hydrocarbons from the air-hydrocarbon vapor mixture flowing therethrough, the switching valves are changed to cause the flow pattern of the inlet air-hydrocarbon vapor mixture to be changed whereby the mixture flows through the regenerated adsorbent bed within the adsorber 14 and the residue gas therefrom to be vented to the atmosphere. The adsorbent bed within the adsorber 12 is simultaneously communicated with the vacuum pump 72 etc. to be regenerated, the flow pattern of the inlet air-hydrocarbon vapor mixture and the bed being regenerated is continuously cycled so that when the adsorbent bed through which the inlet vapor mixture is flowing has become loaded with adsorbed hydrocarbons, the inlet mixture is caused to flow into the bed which has just been regenerated. The hydrocarbon-rich air-hydrocarbon vapor mixture produced from the bed being regenerated is continuously contacted with liquid adsorbent in the adsorber 86 whereby the hydrocarbons are recovered.

The apparatus 10 is particularly suitable for recovering vaporized multi-component hydrocarbons, such as gasoline light ends, mixed with air produced as a result of loading tank trucks and other vessels. In the application where the air-hydrocarbon vapor mixture is air-gasoline light ends, the liquid absorbent utilized is gasoline. That is, stored gasoline is pumped from a storage facility into the absorber 86 and the rich gasoline and condensed hydrocarbon liquids produced by the apparatus 10 are returned to a gasoline storage facility. Because the stored gasoline is continuously being loaded out of the storage facilities and replaced by newly produced gasoline, the stream of gasoline pumped to the absorber is lean enough to absorb efficiently gasoline light ends, even when a single gasoline storage facility is utilized.

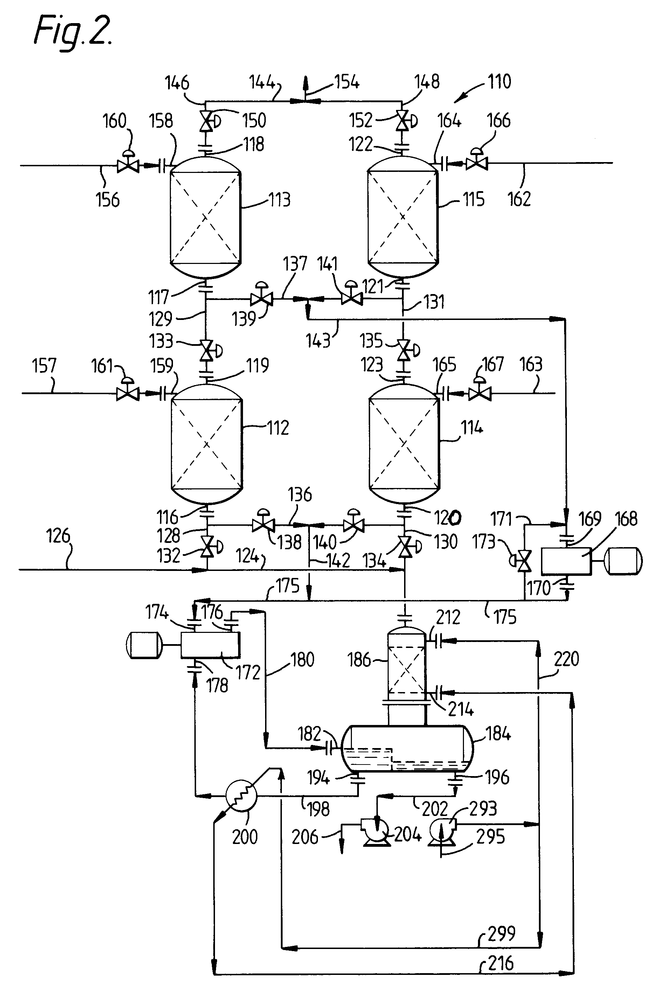

Figure 2 shows another embodiment of the invention. Most of it is substantially similar to the previous embodiment. Like parts have been indicated by like reference numerals with the addition of 100.

The major difference comes from having two pairs of serially connected adsorbers, each pair including upstream and downstream adsorbent beds contained in separate adsorber vessels (upstream and downstream referring to direction of flow during regeneration).

Instead of the single adsorber 12 there is the downstream adsorber 112 with connections 116 and 119 and upstream adsorber 113 with connections 117 and 118. Similarly instead of adsorber 14 there are two adsorbers 114 and 115 with connections 120, 123, and 121, 122. Downstream connection 117 of adsorber 113 is connected to upstream connection 119 of adsorber 112 by conduit 129. Similarly connection 121 of adsorber 115 is connected to connection 123 of adsorber 114 by conduit 131.

There are four stripping air conduits, no longer just two, one for each adsorber vessel. Conduit 156 has a switching valve 160 to adsorber 113 via inlet connection 158. Similarly conduit 157 has a switch valve 161 to 112 via 159, 162 through 166 to 115 via 164 and 163 through 167 to 114 via 165.

The booster pump suction header 137 is provided connected between the conduits 129 and 131 and not between 28 and 30 as it was in the previous embodiment. Switching valves 139 and 141 are disposed in the header 137 with conduit 143 connected between them to the suction connection 169 of booster pump 168 which, as before has a bypass conduit 171.

The conduit 136 that is between conduits 128 and 130 is connected, in this embodiment by conduit 142, straight to conduit 175 attached to suction connection 174 of seal liquid pump 172, conduit 142 joining 175 between the seal liquid pump 172 and booster pump 168.

Other than these differences Figure 2 can be understood from the description of Figure 1.

The operation of the apparatus 110 is similar to the operation of the apparatus 10 described above. During each cycle the inlet air-hydrocarbon vapor mixture is caused to flow through one of the pairs of serially connected absorbers while the other pair is being regenerated.

During a first part of the cycle, a hydrocarbon-rich air-hydrocarbon vapor mixture is withdrawn from the upstream and downstream adsorbent beds within the adsorbers 115 and 114, respectively, by way of the liquid seal vacuum pump 172. The air-hydrocarbon vapor mixture produced is withdrawn from the upstream adsorbent bed within the adsorber 115 by way of the conduit 131 and the open switching valve 135. The valve 141 in the header 137 is closed during the initial part of the cycle and the bypass valve 173 in the bypass conduit 171 around the continuously operating booster pump 168 is open.

The air-hydrocarbon vapor mixture from the adsorber 115 enters and flows through the downstream bed of adsorbent within the adsorber 114 wherein it mixes with additional desorbed air-hydrocarbon vapor mixture. The combined vapor mixture, rich in hydrocarbon vapor, is withdrawn from the adsorber 114 by way of the conduit 130, the header 136, the open switching valve 140 and the conduit 142 which is connected to conduit 175 which in turn is connected to the inlet connection 174 of the liquid seal vacuum pump 172. The switching valve 134 in the conduit 130 is closed. From the liquid seal vacuum pump 172, the hydrocarbon-rich air-hydrocarbon vapor mixture withdrawn from the upstream and downstream adsorbent beds within the adsorbers 115 and 114 is conducted to the separator 184, absorber 186 and related apparatus, all of which operates in an identical manner to the separator 84, absorber 86 and related equipment of the apparatus 10 described above.

During a latter part of the cycle, after a major portion of hydrocarbons adsorbed on the beds of adsorbent within the adsorbers 115 and 114 have been desorbed therefrom by the operation of the liquid seal vacuum pump 172, the switching valve 135 in the conduit 131 is closed, the switching valve 141 in the header 137 is opened, and the bypass valve 173 in the booster pump bypass conduit 171 is closed whereby the booster pump 168 is loaded and communicated with the upstream bed of adsorbent within the adsorber 115. The booster pump lowers the pressure within the adsorber 115 an additional amount and evacuates additional desorbed hydrocarbons and air therefrom. The air-hydrocarbon vapor mixture is pumped by the booster pump 168 through the conduit 175 and into the liquid seal vacuum pump 172. Simultaneously with, or at about the same time as the booster pump 168 is loaded, the switching valve 167 in conduit 163 is opened whereby hydrocarbon-free stripping air enters the downstream adsorber 114. As described above, the introduction of hydrocarbon-free air into the adsorbent bed under vacuum conditions functions to strip additional hydrocarbons from the bed.

After a great vacuum has been achieved in the upstream adsorber 115 due to the loading of the booster pump 168, switching valve 166 in conduit 162 is opened whereby hydrocarbon-free stripping air enters the upstream adsorber 115. This stripping air functions to strip additional hydrocarbons from the adsorbent bed. Because of the combined action of the stripping air and the greater vacuum achieved therein, the upstream adsorber bed within adsorber 115 is regenerated to a greater degree than the downstream adsorbent bed in adsorber 114. During the next cycle, the inlet air-hydrocarbon vapor mixture is caused to flow through the bed in the adsorber 114 first, and then through the bed in the adsorber within the adsorber 115. Because the bed within the adsorber 115 was regenerated to a greater degree than the bed within the adsorber 114, the substantially hydrocarbon-free air leaving the adsorber 115 is purified to a greater degree.

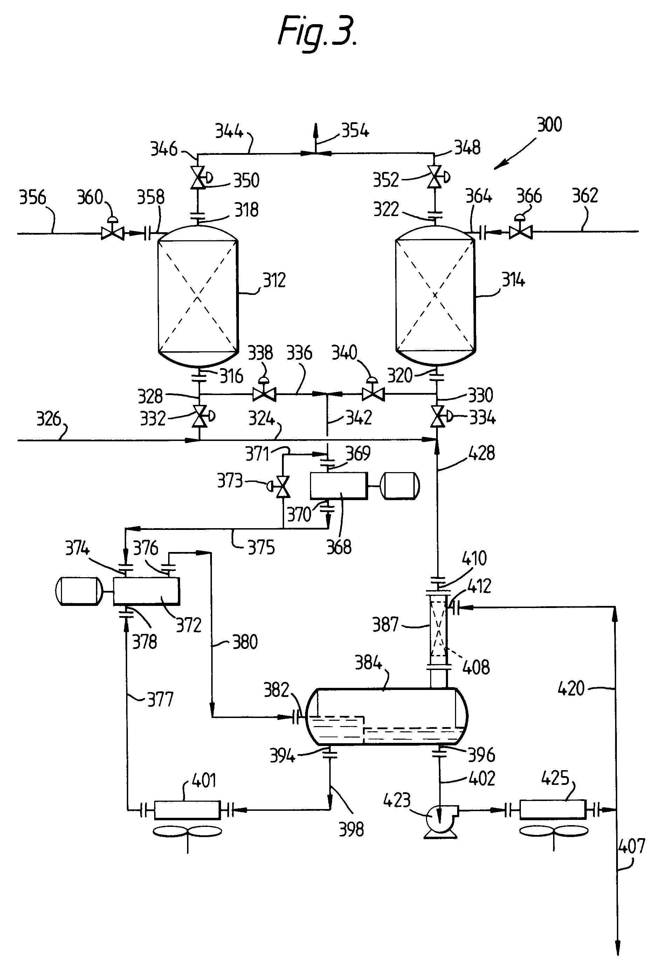

Referring now to Figure 3, the apparatus generally designated 300 is similar to that of Figure 1 and for like parts description by like reference numerals with the addition of 300. This apparatus is suitable for use only for recovering hydrocarbons from an air-hydrocarbon vapor mixture in which all the hydrocarbon components are relatively non-volatile and are capable of being condensed in the absence of air at conditions near ambient, e.g., a vapor mixture of benzene and air. The apparatus 300 is not suitable for recovering hydrocarbons from an air-multi component hydrocarbon vapor mixture in which some of the hydrocarbon components are relatively volatile and will not condense at or near ambient conditions in the absence of air, e.g., air-gasoline vapor, and such air-multi component hydrocarbon mixtures must be processed using the apparatus 10 or 100, previously described.

The differences of this apparatus compared to that of Figure 1 occur when extracting the hydrocarbons from the separator because the hydrocarbon components to be removed from the inlet air-hydrocarbon vapor mixture are relatively non-volatile and condense at near ambient conditions, a hydrocarbon condenser 387 is used instead of an absorber as described above for the apparatus 10 and 100. The hydrocarbon condenser 387 can take various forms. In the embodiment shown in Figure 3, the condenser 387 is a column connected directly to the top of the separator 384. The column can include a packed section 408 therewithin for bringing about intimate contact between the air-hydrocarbon vapor mixture flowing upwardly and the cooled condensed hydrocarbon liquid flowing downwardly therein.

As described above in connection with the separator 84 of the apparatus 10, the liquid seal vacuum pump 372 causes the air-hydrocarbon vapor mixture pumped thereby to be cooled and a portion of the hydrocarbon in the cooled mixture to be condensed. The condensed hydrocarbon is separated in the separator 384 and is withdrawn therefrom by way of a condensed hydrocarbon outlet connection 396 therein. A conduit 402 is connected to the connection 396 and to the suction connection of a pump 423. The discharge of the pump 423 is connected to a conduit to a cooler 425. The cooler 425 is preferably an air cooler, and most preferably, an evaporative air cooler, and functions to cool the condensed hydrocarbon flowing therethrough. The cooled condensed hydrocarbon exits the cooler 425 by way of an outlet connection to a conduit 420. The conduit 407 conducts a portion of the condensed hydrocarbon to storage facilities (not shown), and the remaining portion is conducted to an inlet connection in the condenser 387 by a conduit 420 connected between the inlet connection 412 and the conduit 407. A conduit 428 connects a vapor outlet connection 410 in the condenser 387 to the inlet header 324. The liquid for the liquid seal pump is cooled differently from before, by cooler 401, preferably like cooler 425, interposed between conduit 398 from the separator and 377 to the liquid seal pump 372.

The operation of the apparatus 300 is identical to the operation of the apparatus 10 previously described except that instead of an absorber connected to the 3-phase separator, the apparatus 300 has a hydrocarbon condenser 387 connected to the 3-phase separator 384. Because substantially all of the hydrocarbon vapor can be readily condensed and separated from the mixture of hydrocarbons and air withdrawn from the separator 384, a condensing process and apparatus can be used. That is, condensed hydrocarbons conducted from the separator 384 by the conduit 402 are pumped by the pump 423 through the cooler 425 whereby the condensed hydrocarbons are cooled. A portion of the cooled condensed hydrocarbons are conducted by way of the conduit 420 to the upper portion of the condenser 387. The air-hydrocarbon vapor mixture separated in the separator 384 and flowing upwardly through the condenser 387 is intimately contacted in the packed section 408 thereof by the downwardly flowing cooled condensed hydrocarbon liquid which causes a major portion of the hydrocarbon vapor contained in the mixture to be condensed and separated from the mixture. The separated hydrocarbon liquid passes into the separator 384 from where it is removed by way of the conduit 402, etc. The remaining mixture of air and hydrocarbon vapor exiting the condenser 387 is conducted therefrom by a conduit 428 connected thereto. The conduit 428 is connected to the inlet header 324 whereby the air-hydrocarbon vapor mixture from the condenser 387 is combined with the air-hydrocarbon vapor inlet mixture, etc.

In order to more clearly illustrate the operation of the apparatus of the present invention, the following example is given.

### Example

A typical gasoline truck loading terminal has the following loading pattern:

| | |
|---|---|
| Maximum Instantaneous Rate | 27,300 litres/minute |
| Maximum Throughput in 15 minutes | 193,000 litres |
| Maximum Throughput in 1 hour | 579,000 litres |
| Maximum Throughput in 4 hours | 1,737,000 litres |
| Maximum Throughput Daily | 6,950,000 litres |

The gasoline loaded is deemed to have the following properties:

| | |
|---|---|
| Summer | 62 kpa RVP, 32°C maximum |
| Winter | 83 kpa RVP, 16°C minimum |

It is recognized that the hydrocarbon concentration of the air-hydrocarbon vapor mixture generated by loading gasoline into the truck transports will vary according to gasoline volatility and the degree of air saturation attained.

Based on the above gasoline properties and other experience factors known, a design hydrocarbon concentration of 40% Vol. is selected.

The apparatus 10 is designed for an approximately 15 minute cycle time, and consequently, it is necessary to design each adsorption vessel 12 and 14 to handle a net air-hydrocarbon vapor influent from the truck loading rack of 27.2 cubic metres per minute and 193 cubic metres each cycle based on a 1.0 vapor growth factor. Approximately 10,000 kg. of the appropriate activated carbon is chosen and distributed equally in two 2.75 metres in diameter by approximately 2.75 metres high adsorption vessels 12 and 14. These two adsorption vessels are operated near ambient temperatures and only slightly above atmospheric pressure during the adsorption cycle.

A lobed rotor vacuum booster pump 68 with a 56 kilowatt electric motor and a liquid ring vacuum pump 72 with a 36 kilowatt electric motor are provided for regeneration of the beds of carbon after each adsorption cycle. Very effective regeneration of carbon beds 12 and 14 is accomplished each cycle by the introduction of stripping air therein under high vacuum conditions. The regeneration apparatus provided allows attainment of 74 millimeters of mercury absolute pressure (1mm Hg = 133 Pa) each cycle with the liquid seal vacuum pump 72 alone and with the vacuum assist provided by the booster pump 68, an absolute pressure of 25 millimeters of mercury (1mm Hg = 133 Pa) or less can be attained.

An air-hydrocarbon vapor mixture containing from about 80% to about 95% by volume hydrocarbons, i.e., gasoline light ends, are discharged from the vacuum pump 72 to 0.75 metres diameter by approximately 4 metres high packed absorber 86 integrally connected to 1.2 metres diameter by approximately 3 metres long 3-phase separator 84. The major portion of the hydrocarbon vapors are absorbed and thereby recovered in a downward flowing stream of gasoline with the absorber 86.

The minor portion of hydrocarbon vapors not absorbed into the gasoline absorbent exits the top of the absorber 86. These hydrocarbons flow to whichever adsorber 12 or 14 is in the adsorption mode where they are adsorbed onto the activated carbon. Subsequently, during regeneration of the carbon, they are removed and returned to the absorber 86. Eventually almost all of the hydrocarbon vapors are recovered.

Centrifugal pumps 104 and 122, each with 7.5 kilowatts electric motor drivers are provided to circulate 719 litres per minute of gasoline from storage facilities for purposes of providing the liquid absorbent from the absorber 86 and to provide the necessary seal fluid cooling medium in the seal fluid cooler 100.

Apparatus 10 designed as described above can be expected to remove and recover the hydrocarbon vapors generated from the transport loading rack such that less than 0.15 milligrams of hydrocarbons will be vented to the atmosphere per litre of gasoline loaded.

## Claims

1. A process for recovering hydrocarbons from an inlet air-hydrocarbon vapor mixture comprising the steps of:-
a flowing said inlet mixture through a first bed (12) of solid adsorbent having an affinity for hydrocarbons whereby hydrocarbons are adsorbed on said bed and a residue gas stream comprised of substantially hydrocarbon-free air is produced;
b venting said substantially hydrocarbon-free air;
c evacuating a second bed (14) of solid adsorbent having hydrocarbons adsorbed thereon by vacuum pumping with a liquid seal vacuum pump (72) whereby a major portion of said hydrocarbons are desorbed from said bed and a hydrocarbon-rich air-hydrocarbon vapor mixture is produced from said second bed;
d further evacuating said second bed by vacuum pumping with an additional pump connected upstream and in series with said liquid seal pump (72), while continuing to pump with said liquid seal vacuum pump, whereby additional hydrocarbons are desorbed from said bed;
e removing a major portion of the hydrocarbons contained in the air-hydrocarbon vapor mixture from said second bed (14) therefrom whereby a residue gas stream comprised of air and a minor portion of hydrocarbons is produced;
f combining said residue gas stream produced in step e with said inlet air-hydrocarbons mixture of step a whereby hydrocarbons contained therein are adsorbed on said first bed (12) of solid adsorbent;
g introducing a quantity of hydrocarbon-free purge air into said second bed while evacuating said bed whereby additional hydrocarbons are stripped from said bed and additional air-hydrocarbon mixture produced; and
h periodically changing the flow pattern of said inlet air-hydrocarbon mixture and changing the bed of solid adsorbent being evacuated whereby when the bed through which the inlet air-hydrocarbon mixture is flowing becomes loaded with adsorbed hydrocarbons, the inlet air-hydrocarbon mixture is caused to flow through the bed which has just been evacuated and stripped; characterised in that said continuously operating rotary blower works as said additional pump (68) and in that during step c the valve (73) in the bypass conduit (71) for the additional pump (68) is open and the vacuum in the second bed is created by the liquid seal pump (72) alone.

2. A process according to claim 1, characterised in that said step e of removing a major portion of hydrocarbons from the air-hydrocarbon vapor mixture from said second bed (14) comprises condensing a major portion of said hydrocarbons in said mixture and separating said condensed hydrocarbons from said mixture.

3. A process according to claim 1, characterised in that said step e of removing a major portion of hydrocarbons from the air-hydrocarbon vapor mixture from said second bed comprises separating the liquid from the liquid seal vacuum pump and the condensed hydrocarbon ligands from each other and from the air-hydrocarbon vapor mixture; contacting the separated air-hydrocarbon mixture in an absorber (86) with a lean liquid absorbent having an affinity for hydrocarbons whereby a major portion of the hydrocarbons are removed therefrom, a hydrocarbon-rich liquid absorbent is produced and a residue gas stream comprised of air and a minor portion of hydrocarbons is produced; and combining the separated hydrocarbon liquids with the hydrocarbon-rich liquid absorbent.

4. A process according to any preceding claim, characterised in that said first (112) and second (114) beds are each comprised of serially connected upstream (113) and downstream (115) beds, both of said upstream and downstream beds being evacuated by said liquid seal vacuum pump, but only said upstream bed being further evacuated.

5. A process according to any preceding claim, characterised in that the valve (73) in the bypass conduit (71) is closed during step d.

6. Apparatus for recovering hydrocarbons from an air-hydrocarbon vapor mixture comprising:-
a a pair of adsorbers (12,14) containing beds of solid adsorbent having an affinity for hydrocarbons and having first and second connections on opposite sides of said beds;
b first conduit (28,30) means connected to the first connections (16,20) of said adsorbers (12,14) for conducing said air-hydrocarbon vapor mixture to said adsorbers and for evacuating said adsorbers;
c valve means (32,34) disposed in said first conduit means for selectively causing said air-hydrocarbon vapor mixture to flow through one or the other of said adsorbers;
d second conduit means (46,48) connected to the second connections (18,22) of said adsorbers for venting residue gas exiting said adsorbers;
e second valve means (50,52) disposed in said second conduit means for selectively causing the second connections of one or the other of said adsorbers to be open for venting the air;
f a liquid seal vacuum pump (72) having a suction connection (74), a discharge connection (76) and a seal liquid inlet connection (78);
g third conduit means (42) connected between the suction connection of said liquid seal vacuum pump and said first conduit means connected to said adsorbers;
h third valve means (38,40) disposed in said third conduit means for selectively communicating one or the other of said adsorbers with the suction connection of said vacuum pump;
i hydrocarbon removal means (84,86,387) for removing hydrocarbons from an air-hydrocarbon vapor mixture having an air-hydrocarbon vapor mixture inlet connection (82), a residue gas outlet connection (10), and a liquid hydrocarbon outlet connection (96);
j fourth conduit means (80) connected between the air-hydrocarbon vapor mixture inlet of said hydrocarbon removal means and the discharge connection of said liquid seal vacuum pump; and
k fifth conduit means (197) connected between the residue gas outlet connection of said hydrocarbon removal means and said first conduit means;
l sixth conduit means (36,62) connected to said adsorbers for conducing stripping air to said adsorbers; and
m fourth valve means (60,66) disposed in said sixth conduit means for selectively communicating one or the other of said adsorbers with stripping air.
n an additional vacuum pump (68) disposed in said third conduit means, characterised in that said additional pump (68) is a continuously operating rotary blower, in that a bypass conduit (71) is connected in parallel to said rotary blower (68) and in that a switching valve (73) is provided in said bypass conduit (71) to load and unload the rotary blower.

7. Apparatus according to claim 6, characterised in that said hydrocarbon removal means is comprised of an absorber (86) for contacting said air-hydrocarbon vapor mixture with a liquid absorbent having a lean liquid absorbent inlet connection (112), and said apparatus is further characterised to include:-
a separator (84) for separating an air-hydrocarbon vapor mixture, condensed hydrocarbon liquids and seal liquid from each other and combining rich liquid absorbent with said condensed hydrocarbon liquids, said separator having an air-hydrocarbon vapor-condensed hydrocarbon liquids-seal liquid inlet connection (82), a rich liquid absorbent inlet connection (114), a seal liquid outlet connection (94), a rich liquid absorbent-condensed hydrocarbon liquid outlet connection (96) and an air-hydrocarbon vapor mixture outlet connection, the inlet connection of said separator being connected to said fourth conduit means and the air-hydrocarbon vapor mixture outlet connection thereof being connected to the air-hydrocarbon vapor mixture inlet connection of said absorber;
seventh conduit means (98) connected between the seal liquid outlet connection (94) of said separator and the seal liquid inlet connection (78) of said liquid seal vacuum pump (72);
means (100) for cooling seal liquid disposed in said seventh conduit means; and
eighth conduit means connected between the rich liquid absorbent inlet connection of said separator and the rich liquid absorbent outlet connection of said absorber.

8. Apparatus according to claim 6 or 7, characterised in that each of said adsorbers containing beds of adsorbent of element (a) is comprised of a pair of serially connected upstream (113,115) and downstream (112,114) adsorbers containing upstream and downstream beds of adsorbent and having first (116,117,120,121) and second (119,118,123,122) connections, and said apparatus is further characterised to include:
ninth conduit means (129,131) connected between said first connections (117,121) of said upstream adsorbers and said second connections (119,123) of said downstream adsorbers for conducting said air-hydrocarbon vapor mixture to said upstream adsorbers and for evacuating said upstream adsorbers;
fifth valve means (133,135) in said ninth conduit means for selectively communicating one or the other of said adsorbers with said booster pump (168); and
said booster pump being disposed in tenth conduit means (143) connected between said ninth conduit means and said third conduit means.

9. Apparatus according to claim 6, or 8, characterised in that said hydrocarbon removal means is comprised of a hydrocarbon condenser (387) for contacting said air-hydrocarbon vapor mixture with a cooled stream of condensed hydrocarbons to thereby condense hydrocarbons from said mixture having a cooled condensed hydrocarbon inlet connection (412), and said apparatus is further characterised to include:-
a separator (384) for separating an air-hydrocarbon vapor mixture, condensed hydrocarbons and seal liquid from each other and combining additional condensed hydrocarbons with said separated condensed hydrocarbons, said separator having an air-hydrocarbon vapor-condensed hydrocarbons seal liquid inlet connection (382), a condensed hydrocarbons inlet connection (112), a seal liquid outlet connection (394), a condensed hydrocarbons outlet connection (396) and an air-hydrocarbon vapor mixture outlet connection, the inlet connection of said separator being connected to said fourth conduit means (380) and the air-hydrocarbon vapor mixture outlet connection being connected to the air-hydrocarbon vapor mixture inlet connection of said condenser;
seventh conduit means (377) connected between the seal liquid outlet connection (394) of said separator and the seal liquid inlet connection of said liquid seal vacuum pump (378);
means (401) for cooling seal liquid disposed in said seventh conduit means;
eighth conduit means connected between the condensed hydrocarbons inlet connection of said separator and said liquid hydrocarbon outlet connection of said condenser;
further conduit means (420) connected to said condensed hydrocarbons outlet connection of said separator (396) and to said condensed hydrocarbons inlet connection of said condenser (412);
pump means (423) disposed in said further conduit means; and
means (425) for cooling condensed hydrocarbons disposed in said further conduit means.

## Patentansprüche

1. Verfahren zur Wiedergewinnung von Kohlenwasserstoffen aus einer Zuführungsluft-Kohlenwasserstoffdampfmischung umfassend die Schritte:
a) Durchströmen dieser Zuführungsmischung durch ein erstes Bett (12) eines festen Adsorbens, welches eine Affinität für Kohlenwasserstoffe aufweist, wodurch Kohlenwasserstoffe an diesem Bett adsorbiert werden und ein Rückstandsgasstrom umfassend im wesentlichen Kohlenwasserstofffreie Luft gebildet wird;
b) Entlüften dieser im wesentlichen Kohlenwasserstoff-freien Luft;
c) Evakuieren eines zweiten Bettes (14) aus festen Adsorbens, welches Kohlenwasserstoffe daran adsorbiert enthält, durch Vakuumpumpen mit einer Flüssigkeitsring-Vakuumpumpe (72), wodurch ein Hauptteil dieser Kohlenwasserstoffe von diesem Bett desorbiert werden und eine kohlenwasserstoffreiche Luft-Kohlenwasserstoffdampfmischung von diesem zweiten Bett gebildet wird;
d) weiteres Evakuieren dieses zweiten Bettes durch Vakuumpumpen mit einer zusätzlichen Pumpe, welche stromaufwärts angeordnet ist und in Serie mit dieser Flüssigkeitsring-Vakuumpumpe (72) geschaltet ist, während das Pumpen mit dieser Flüssigkeitsring-Vakuumpumpe fortgesetzt wird, wodurch zusätzliche Kohlenwasserstoffe von diesem Bett desorbiert werden;
e) Entfernen eines Hauptteiles der Kohlenwasserstoffe, welche in der Luft-Kohlenwasserstoffdampfmischung aus dem zweiten Bett (14) enthalten sind, wodurch ein Rückstandsgasstrom bestehend aus Luft und einer kleinen Menge an Kohlenwasserstoffen gebildet wird;
f) Kombinieren des in Schritt e) gebildeten Rückstandsgasstromes mit der Zuführungsluft-Kohlenwasserstoffmischung von Schritt a), wodurch darin enthaltene Kohlenwasserstoffe an dem ersten Bett (12) des festen Adsorbens adsorbiert werden;
g) Einbringen einer Menge an Kohlenwasserstofffreier, Reinigungsluft in dieses zweite Bett, während dieses Bett evakuiert wird, wodurch zusätzliche Kohlenwasserstoffe von dem Bett abgezogen werden und zusätzliche Luft-Kohlenwasserstoffmischung gebildet wird; und
h) periodisches Ändern des Flußmusters dieser Zuführungsluft-Kohlenwasserstoffmischung und Ändern des Bettes des festen Adsorbens, welches evakuiert wird, wodurch, wenn das Bett, durch welches die Zuführungsluft-Kohlenwasserstoffmischung fließt, mit den adsorbierten Kohlenwasserstoffen beladen wird, die Zufühtungsluft-Kohlenwasserstoffmischung gezwungen wird, durch das Bett zu fließen, welches gerade evakuiert und gestrippt wurde; dadurch gekennzeichnet, daß das kontiunierlich arbeitende Zentrifugalgebläse als zusätzliche Pumpe (68) arbeitet und daß während Schritt c) das Ventil (73) in der Bypaßleitung (71) für die zusätzliche Pumpe (68) offen ist und das Vakuum in dem zweiten Bett durch die Flüssigkeitsringpumpe (72) alleine gebildet wird.

2. Verfahren nach Anspruch 1, dadurch gekennzeichnet, daß der Schritt e) der Entfernung eines Hauptteiles der Kohlenwasserstoffe aus der Luft-Kohlenwasserstoffdampfmischung aus dem zweiten Bett (14) das Kondensieren eines Hauptteiles dieser Kohlenwasserstoffe in dieser Mischung und Abtrennen der kondensierten Kohlenwasserstoffe von dieser Mischung umfaßt.

3. Verfahren nach Anspruch 1, dadurch gekennzeichnet, daß der Schritt e) der Entfernung eines Hauptteiles der Kohlenwasserstoffe aus der Luft-Kohlenwasserstoffdampfmischung aus dem zweiten Bett ein Abtrennen der Flüssigkeit aus der Flüssigkeitsring-Vakuumpumpe und der kondensierten Kohlenwasserstoff-Flüssigkeiten voneinander und von der Luft-Kohlenwasserstoffdampfmischung, ein Kontaktieren der abgetrennten Luft-Kohlenwasserstoffmischung in einem Adsorber (86) mit einem Adsorbens aus verarmter Flüssigkeit, welche eine Affinität für Kohlenwasserstoffe aufweist, wodurch ein Hauptteil der Kohlenwasserstoffe davon abgetrennt wird, ein kohlenwasserstoffreiches, flüssiges Adsorbens gebildet wird, und ein Rückstandsgasstrom umfassend Luft und einen geringen Teil an Kohlenwasserstoffen gebildet wird und ein Vereinigen der abgetrennten Kohlenwasserstoff-Flüssigkeiten mit dem kohlenwasserstoffreichen, flüssigen Adsorbens umfaßt.

4. Verfahren nach einem der vorhergehenden Ansprüche, dadurch gekennzeichnet, daß die ersten (112) und zweiten (114) Betten jeweils aus seriell miteinander verbundenen, stromaufwärts (113) und stromabwärts (115) liegenden Betten bestehen, wobei beide der stromaufwärts und stromabwärts liegenden Betten durch die Flüssigkeitsring-Vakuumpumpe evakuiert werden, jedoch nur das stromaufwärts liegende Bett weiter evakuiert wird.

5. Verfahren nach einem der vorhergehenden Ansprüche, dadurch gekennzeichnet, daß das Ventil (73) in der Bypassleitung (71) während Schritt d) geschlossen ist.

6. Vorrichtung zur Wiedergewinnung von Kohlenwasserstoffen aus einer Luft-Kohlenwasserstoffdampfmischung umfassend:
a) ein Paar Adsorber (12, 14) enthaltend Betten aus festem Adsorbens, welche eine Affinität für Kohlenwasserstoffe aufweisen und welche erste und zweite Anschlüsse an entgegengesetzen Seiten der Betten aufweisen;
b) erste Leitungen (28, 30), welche mit den ersten Anschlüssen (16, 20) der Adsorber (12, 14) verbunden sind, um die Luft-Kohlenwasserstoffdampfmischung zu den Adsorbern zu führen und um die Adsorber zu evakuieren;
c) Ventile (32, 34), welche in den ersten Leitungen angeordnet sind, um selektiv einen Fluß der Luft-Kohlenwasserstoffdampfmischung durch den einen oder den anderen der Adsorber zu bewirken;
d) zweite Leitungen (46, 48), welche mit den zweiten Anschlüssen (18, 22) der Adsorber verbunden sind, um ein Rückstandsgas abzuziehen, welches diese Adsorber verläßt;
e) zweite Ventile (50, 52), welche in den zweiten Leitungen angeordnet sind, um selektiv zu bewirken, daß die zweiten Anschlüsse von dem einen oder dem anderen der Adsorber für ein Ablassen der Luft geöffnet sind;
f) eine Flüssigkeitsring-Vakuumpumpe (72), welche einen Sauganschluß (74), einen Auslaßanschluß (76) und einen Dichtflüssigkeits-Einlaßanschluß (78) aufweist;
g) eine dritte Leitung (42), welche zwischen dem Sauganschluß der Flüssigkeitsring-Vakuumpumpe und den ersten Leitungen, welche mit dem Adsorber verbunden sind, angeordnet ist;
h) dritte Ventile (38, 40), welche in der dritten Leitung für die selektive Verbindung des einen oder des anderen Adsorbers mit dem Sauganschluß der Vakuumpumpe angeordnet sind;
i) Kohlenwasserstoff-Abzugseinrichtungen (84, 86, 387) zum Entfernen von Kohlenwasserstoffen aus einer Luft-Kohlenwasserstoffdampfmischung, welche einen Einlaßanschluß für die Luft-Kohlenwasserstoffdampfmischung (82), einen RückstandsgasAuslaßanschluß (10) und einen Auslaßanschluß (96) für flüssige Kohlenwasserstoffe aufweist;
j) eine vierte Leitung (80), welche zwischen dem Einlaß für die Luft-Kohlenwasserstoffdampfmischung der Kohlenwasserstoff-Abzugseinrichtungen und dem Auslaßanschluß der Flüssigkeitsring-Vakuumpumpe angeordnet ist; und
k) eine fünfte Leitung (197), welche zwischen dem Rückstandsgas-Auslaßanschluß der Kohlenwasserstoff-Abzugseinrichtungen und den ersten Leitungen angeschlossen ist;
l) sechste Leitungen (56, 62), welche mit den Adsorbern verbunden sind, um das Abziehen von Luft von diesen Adsorbern zu bewirken: und
m) vierte Ventile (60, 66), welche in den sechsten Leitungen angeordnet sind, für die selektive Verbindung von dem einem oder dem anderen dieser Adorber mit dem Luftabzug;
n) eine zusätzliche Vakuumpumpe (68), welche in der dritten Leitung angeordnet ist, dadurch gekennzeichnet, daß die zusätzliche Pumpe (68) ein kontinuierlich arbeitendes Zentrifugalgebläse ist, daß eine Bypassleitung (71) parallel zu dem Zentrifugalgebläse (68) angeordnet ist und daß ein Umschaltventil (63) in der Bypassleitung (71) vorgesehen ist, um das Zentrifugalgebläse zu laden und zu entladen.

7. Vorrichtung nach Anspruch 6, dadurch gekennzeichnet, daß die Kohlenwasserstoff-Abzugseinrichtungen aus einem Adsorber (86) zum Kontaktieren der Luft-Kohlenwasserstoffdampfmischung mit einem flüssigen Adsorbens besteht, welcher einen Einlaßanschluß für das Adsorbens aus verarmter Flüssigkeit (112) aufweist und welche Vorrichtung weiters dadurch gekennzeichnet ist, daß sie umfaßt:
einen Abscheider (84) zum Abtrennen einer Luft-Kohlenwasserstoffdampfmischung, kondensierten, flüssigen Kohlenwasserstoffen und Dichtflüssigkeiten voneinander und zum Kombinieren des Absorbens aus angereicherter Flüssigkeit mit diesen kondensierten Kohlenwasserstoff-Flüssigkeiten, wobei dieser Abscheider einen Einlaßanschluß für Luft-Kohlenwasserstoffdampfkondensierte Kohlenwasserstoffflüssigkeiten-Dichtflüssigkeit (82), einen Einlaßanschluß für ein Adsorbens aus angereicherter Flüssigkeit (114), einen Dichtflüssigkeits-Auslaßanschluß (94), einen Auslaßanschluß für ein Adsorbens aus angereicherter Flüssigkeitkondensierten Kohlenwasserstoffflüssigkeiten (96) und einen Auslaßanschluß für Luft-Kohlenwasserstoffdampfmischung aufweist, wobei der Einlaßanschluß des Abscheiders mit den vierten Leitungen verbunden ist und der Auslaßanschluß für Luft-Kohlenwasserstoffdampfmischung desselben mit dem Einlaßanschluß für Luft-Kohlenwasserstoffdampfmischung des Adsorbers verbunden ist;
siebente Leitungen (98), welche zwischen dem Dichtflüssigkeits-Auslaßanschluß (94) des Abscheiders und dem Dichtflüssigkeits-Einlaßanschluß (78) der Flüssigkeitsring-Vakuumpumpe (72) angeordnet sind;
Mittel (100) zum Kühlen der Dichtflüssigkeit, welche in diesen siebenten Leitungen angeordnet ist, und
achte Leitungen, welche zwischen dem Einlaßanschluß für das Adsorbens für angereicherte Flüssigkeit des Abscheiders und dem Auslaßanschluß für das Adsorbens für angereicherte Flüssigkeit des Adsorbers angeordnet sind.

8. Vorrichtung nach Anspruch 6 oder 7, dadurch gekennzeichnet, daß jeder der Adsorber, welche Adsorbensbetten des Elementes (a) aufweisen, aus einem Paar von seriell miteinander verbundenen, stromaufwärts (113, 115) und stromabwärts (112, 114) liegenden Adsorbern besteht, welche stromaufwärts und stromabwärts liegende Betten des Adsorbens aufweisen und welche erste (116, 117, 120, 121) und zweite (119, 118, 123, 122) Anschlüsse aufweisen, und welche Vorrichtung weiters dadurch gekennzeichnet ist, daß sie umfaßt:
neunte Leitungen (129, 131), welche zwischen den ersten Anschlüsse (117, 121) der stromaufwärts liegenden Adsorber und den zweiten Anschlüsse (119, 123) der stromabwärts liegenden Adsorber angeordnet sind, um die Luft-Kohlenwasserstoffdampfmischung zu den stromaufwärts liegenden Adsorbern zu führen und um die stromaufwärts liegenden Adsorber zu evakuieren;
fünfte Ventile (133, 135) in den neunten Leitungen für die selektive Verbindung des einen oder des anderen der Adsorber mit der Druckpumpe (168); und
wobei diese Druckpumpe in zehnten Leitungen (143) angeordnet ist, welche zwischen den neunten Leitungen und den dritten Leitungen angeschlossen sind.

9. Vorrichtung nach Anspruch 6 oder 8, dadurch gekennzeichnet, daß die Kohlenwasserstoff-Abzugseinrichtungen aus einem Kohlenwasserstoffverflüssiger (387) für das Kontaktieren der Luft-Kohlenwasserstoffdampfmischung mit einem gekühlten Strom an kondensierten Kohlenwasserstoffen besteht, um dadurch Kohlenwasserstoffe aus der Mischung zu kondensieren, wobei ein Einlaßanschluß (412) für gekühlte, kondensierte Kohlenwasserstoffe vorgesehen ist, und welche Vorrichtung weiters dadurch gekennzeichnet ist, daß sie umfaßt:
a) einen Abscheider (384) zum Trennen einer Luft-Kohlenwasserstoffdampfmischung, kondensierten Kohlenwasserstoffen und Dichtflüssigkeit voneinander und Vereinigen von zusätzlichen, kondensierten Kohlenwasserstoffen mit den abgetrennten, kondensierten Kohlenwasserstoffen, wobei dieser Abscheider einen Einlaßanschluß für Luft-Kohlenwasserstoffdampfkondensierte Kohlenwasserstoffe-Dichtflüssigkeit (382), einen Einlaßanschluß für kondensierte Kohlenwasserstoffe (412), einen Auslaßanschluß für Dichtflüssigkeit (394), einen Auslaßanschluß für kondensierte Kohlenwasserstoffe (396) und einen Auslaßanschluß für Luft-Kohlenwasserstoffdampfmischung aufweist, wobei der Einlaßanschluß des Abscheiders mit den vierten Leitungen (380) verbunden ist und der Auslaßanschluß für die Luft-Kohlenwasserstoffdampfmischung mit dem Einlaßanschluß für die Luft-Kohlenwasserstoffdampfmischung des Verflüssigers verbunden ist;
eine siebente Leitung (377), welche zwischen dem Dichtflüssigkeits-Auslaßanschluß (394) des Abscheiders und dem Dichtflüssigkeits-Einlaßanschluß der DichtflüssigkeitsringVakuumpumpe (378) angeordnet ist; Mittel (401) zum Kühlen der Dichtflüssigkeit, welche in der siebenten Leitung angeordnet sind;
eine achte Leitung, welche zwischen dem Einlaßanschluß für kondensierte Kohlenwasserstoffe des Abscheiders und den Auslaßanschlüssen für flüssige Kohlenwasserstoffe des Verflüssigers angeordnet ist;
eine weitere Leitung (420), welche mit dem Auslaßanschluß für kondensierte Kohlenwasserstoffe des Abscheiders (396) und dem Einlaßanschluß für kondensierte Kohlenwasserstoffe des Kondensors (412) verbunden ist;
eine Pumpe (423), welche in der weiteren Leitung angeordnet ist; und Mittel (425) zum Kühlen der kondensierten Kohlenwasserstoffe, welche in der weiteren Leitung angeordnet sind.

## Revendications

1. Procédé pour la récupération des hydrocarbures d'un mélange d'arrivée d'air et de vapeurs d'hydrocarbures, comprenant les étapes suivantes :
a ) le passage dudit mélange d'arrivée à travers un premier lit (12) d'adsorbant solide ayant une affinité pour les hydrocarbures, les hydrocarbures étant adsorbés sur ledit lit et un flux de gaz résiduel constitué par de l'air substantiellement exempt d'hydrocarbure étant obtenu ;
b) la mise à l'atmosphère dudit air substantiellement exempt d'hydrocarbure ;
c) l'évacuation d'un second lit (14) d'adsorbant solide sur lequel des hydrocarbures ont été adsorbés, par pompage avec une pompe à vide à liquide de barrage (72), une grande partie desdits hydrocarbures étant ainsi extraite par désorption dudit lit, et un mélange d'air et de vapeurs d'hydrocarbures riche en hydrocarbure étant obtenu à partir dudit second lit ;
d) l'évacuation complémentaire dudit second lit par pompage avec une pompe d'appoint branchée en amont et en série avec ladite pompe à liquide de barrage (72), tout en continuant à pomper avec ladite pompe à vide à liquide de barrage, un complément d'hydrocarbures étant ainsi extrait par désorption dudit lit ;
e) l'extraction d'une grande partie des hydrocarbures contenus dans le mélange d'air et de vapeurs d'hydrocarbures provenant dudit second lit (14), un flux de gaz résiduel composé d'air et d'une faible quantité d'hydrocarbures étant ainsi obtenu ;
f) la combinaison dudit flux de gaz résiduel produit à l'étape e) avec ledit mélange d'arrivée d'air et d'hydrocarbures de l'étape a), les hydrocarbures présents étant adsorbés sur ledit premier lit (12) d'adsorbant solide ;
g) l'introduction d'une quantité d'air d'épuration exempt d'hydrocarbures dans ledit second lit, tout en évacuant ledit lit, un complément d'hydrocarbures étant ainsi extrait dudit lit et un complément de mélange d'air et d'hydrocarbures étant ainsi produit ; et
h) la modification périodique du circuit d'écoulement dudit mélange d'arrivée d'air et d'hydrocarbures et le changement du lit d'adsorbant solide évacué, de telle sorte que lorsque le lit à travers lequel circule le mélange d'arrivée d'air et d'hydrocarbures est chargé en hydrocarbures adsorbés, le mélange d'arrivée d'air et d'hydrocarbures est alors envoyé sur le lit venant d'être évacué et débarrassé de ses hydrocarbures ;
caractérisé en ce que ladite pompe d'appoint (68) est constituée par ladite soufflante rotative à fonctionnement continu, et en ce que, lors de l'étape c), la vanne (73) du conduit de bypass (71) de la pompe d'appoint (68) est ouverte et que le vide est obtenu par la pompe à liquide de barrage (72) uniquement.

2. Procédé selon la revendication 1, caractérisé en ce que ladite étape e) d'extraction d'une grande partie des hydrocarbures contenus dans le mélange d'air et de vapeurs d'hydrocarbures sur le second lit (14) comprend la condensation d'une grande partie desdits hydrocarbures dudit mélange et la séparation desdits hydrocarbures condensés dudit mélange.

3. Procédé selon la revendication 1, caractérisé en ce que ladite étape e) d'extraction d'une grande partie des hydrocarbures contenus dans le mélange d'air et de vapeurs d'hydrocarbures dudit second lit comprend la séparation du liquide de la pompe à vide à liquide de barrage et des hydrocarbures liquides condensés, entre eux, ainsi que du mélange d'air et de vapeurs d'hydrocarbures ; la mise en contact du mélange séparé d'air et d'hydrocarbures dans un absorbeur (86) avec un absorbant liquide pauvre ayant une affinité pour les hydrocarbures, une grande partie des hydrocarbures étant ainsi extraite, un absorbant liquide riche en hydrocarbures étant produit, et un flux de gaz résiduel constitué d'air et d'une faible quantité d'hydrocarbures étant produit ; et en mélangeant les liquides d'hydrocarbures séparés avec l'absorbant liquide riche en hydrocarbures.

4. Procédé selon l'une quelconque des revendications précédentes, caractérisé en ce que lesdits premier (112) et second (114) lits comprennent chacun des lits amont (113) et aval (115) reliés en série, les lits situés en amont et en aval étant tous deux évacués par ladite pompe à vide à liquide de barrage, seul le lit amont étant toutefois soumis à une évacuation complémentaire.

5. Procédé selon l'une quelconque des revendications précédentes, caractérisé en ce que la vanne (73) de la conduite de by-pass (71) est fermée pendant l'étape d).

6. Appareil pour la récupération des hydrocarbures dans un mélange d'arrivée d'air et de vapeurs d'hydrocarbures, comprenant :
a) une paire d'adsorbeurs (12, 14) contenant des lits d'adsorbant solide ayant une affinité pour les hydrocarbures et dotés d'un premier et d'un second raccordement sur les côtés opposés desdits lits :
b) une première conduite (28, 30) branchée sur les premiers raccordements (16, 20) desdits adsorbeurs (12, 14) pour amener ledit mélange d'air et de vapeurs d'hydrocarbures auxdits adsorbeurs et pour évacuer lesdits adsorbeurs ;
c) une vanne (32, 34) disposée dans ladite première conduite pour permettre de diriger d'une façon sélective le mélange d'air et de vapeurs d'hydrocarbures sur l'un ou l'autre desdits adsorbeurs ;
d) une seconde conduite (46, 48) branchée sur les seconds raccordements (18, 22) desdits adsorbeurs pour mettre à l'atmosphère le gaz résiduel sortant desdits adsorbeurs ;
e) une seconde vanne (50, 52) disposée dans ladite seconde conduite pour permettre l'ouverture d'une façon sélective du second raccordement de l'un ou l'autre desdits adsorbeurs pour le mettre à l'atmosphère ;
f) une pompe à vide à liquide de barrage (72) comportant un raccordement d'aspiration (74), un raccordement de refoulement (76) et un raccordement d'entrée (78) du liquide de barrage ;
g) une troisième conduite (42) branchée entre le raccordement d'aspiration de ladite pompe à vide à liquide de barrage et ladite première conduite raccordée auxdits adsorbeurs ;
h) une troisième vanne (38, 40) disposée dans ladite troisième conduite pour permettre la mise en communication d'une façon sélective de l'un ou l'autre desdits adsorbeurs avec le raccordement d'aspiration de ladite pompe à vide ;
i) un moyen d'extraction d'hydrocarbures (84, 86, 387) pour extraire les hydrocarbures d'un mélange d'air et de vapeurs d'hydrocarbures, comportant un raccordement d'entrée (82) pour le mélange d'air et de vapeurs d'hydrocarbures, un raccordement de sortie (10) pour le gaz résiduel et un raccordement de sortie (96) pour les hydrocarbures liquides ;
j) une quatrième conduite (80) branchée entre le raccordement d'entrée pour le mélange d'air et de vapeurs d'hydrocarbures dudit moyen d'extraction d'hydrocarbure et le raccordement de refoulement de ladite pompe à vide à liquide de barrage ; et
k) un cinquième conduite (197) branchée entre le raccordement de sortie du gaz résiduel dudit moyen d'extraction d'hydrocarbures et ladite première conduite ;
l) une sixième conduite (36, 62) branchée sur lesdits adsorbeurs pour amener l'air d'extraction auxdits adsorbeurs ; et
m) une quatrième vanne (60, 66) placée dans ladite sixième conduite pour permettre la mise en communication d'une façon sélective de l'un ou l'autre desdits adsorbeurs avec l'air d'extraction ;
n) une pompe à vide d'appoint (68) disposée dans ladite troisième conduite, caractérisée en ce que ladite pompe d'appoint (68) est une soufflante rotative à fonctionnement continu, en ce qu'une conduite de by-pass (71) est branchée en parallèle sur ladite soufflante rotative (68) et en ce qu'une vanne de commutation (73) est prévue dans ladite conduite de by-pass (71) pour mettre la soufflante rotative en charge ou hors charge.

7. Appareil selon la revendication 6, caractérisé en ce que le moyen d'extraction d'hydrocarbures est constitué d'un absorbeur (86) pour mettre en contact ledit mélange d'air et de vapeurs d'hydrocarbures avec un absorbant liquide ayant un raccordement d'entrée (112) pour absorbant liquide pauvre, ledit appareil étant en outre caractérisé en ce qu'il comporte :
un séparateur (84) pour séparer entre eux un mélange d'air et de vapeurs d'hydrocarbures, les liquides d'hydrocarbures condensés et le liquide de barrage et pour combiner l'absorbant liquide enrichi avec lesdits hydrocarbures liquides condensés, ledit séparateur ayant un raccordement d'entrée (82) pour le liquide de barrage et les hydrocarbures liquides condensés du mélange d'air et de vapeurs d'hydrocarbures, un raccordement d'entrée (114) pour l'absorbant liquide enrichi, un raccordement de sortie (94) pour le liquide de barrage, un raccordement de sortie (96) pour les hydrocarbures liquides condensés et l'absorbant liquide enrichi et un raccordement de sortie pour le mélange d'air et de vapeurs d'hydrocarbures, le raccordement d'entrée dudit séparateur étant relié à ladite quatrième conduite et le raccordement de sortie pour le mélange d'air et de vapeurs d'hydrocarbures étant relié au raccordement d'entrée pour le mélange d'air et de vapeurs d'hydrocarbures dudit absorbeur ;
une septième conduite (98) branchée entre le raccordement de sortie (94) du liquide de barrage dudit séparateur et le raccordement d'entrée (78) du liquide de barrage de ladite pompe à liquide de barrage (72) ;
un moyen (100) pour le refroidissement du liquide de barrage disposé dans ladite septième conduite ; et
une huitième conduite branchée entre le raccordement d'entrée de l'absorbant liquide enrichi dudit séparateur et le raccordement de sortie de l'absorbant liquide enrichi dudit absorbeur.

8. Appareil selon l'une ou l'autre des revendications 6 et 7, caractérisé en ce que chacun desdits adsorbeurs contenant des lits d'élément adsorbant (a) est constitué par une paire d'adsorbeurs amont (113, 115) et aval (112, 114) reliés en série, contenant des lits adsorbants amont et aval, et comportant un premier (116, 117, 120, 121) et un second (119, 118, 123, 122) raccordement, ledit appareil étant en outre caractérisé en ce qu'il comporte :
une neuvième conduite (129, 131) branchée entre lesdits premiers raccordements (117, 121) desdits adsorbeurs amont et lesdits seconds raccordements (119, 123) desdits adsorbeurs aval, pour amener ledit mélange d'air et de vapeurs d'hydrocarbures auxdits adsorbeurs amont et pour l'évacuation desdits adsorbeurs amont ;
une cinquième vanne (133, 135) placée dans ladite neuvième conduite pour permettre la mise en communication d'une façon sélective de l'un ou l'autre desdits adsorbeurs avec ladite pompe d'appoint (168) ; et
ladite pompe d'appoint étant disposée dans une dixième conduite (143) reliant ladite neuvième conduite à ladite troisième conduite.

9. Appareil selon la revendication 6 ou la revendication 8, caractérisée en ce que ledit moyen d'extraction d'hydrocarbures est constitué par un condenseur d'hydrocarbures (387) pour la mise en contact dudit mélange d'air et de vapeurs d'hydrocarbures avec un flux refroidi d'hydrocarbures condensés pour condenser ainsi les hydrocarbures dudit mélange, comportant un raccordement d'entrée (412) pour les hydrocarbures condensés refroidis, ledit appareil étant en outre caractérisé en ce qu'il comporte :
un séparateur (384) pour séparer entre eux un mélange d'air et de vapeurs d'hydrocarbures, les hydrocarbures condensés et le liquide de barrage, et pour combiner les hydrocarbures condensés supplémentaires avec lesdits hydrocarbures condensés séparés, ledit séparateur ayant un raccordement d'entrée (382) pour le liquide de barrage et les hydrocarbures liquides condensés du mélange d'air et de vapeurs d'hydrocarbures, un raccordement d'entrée (112) pour les hydrocarbures condensés, un raccordement de sortie (394) pour le liquide de barrage, un raccordement de sortie (396) pour les hydrocarbures condensés, et un raccordement de sortie pour le mélange d'air et de vapeurs d'hydrocarbures, le raccordement d'entrée dudit séparateur étant relié à ladite quatrième conduite (380), et le raccordement de sortie pour le mélange d'air et de vapeurs d'hydrocarbures étant relié au raccordement d'entrée pour le mélange d'air et de vapeurs d'hydrocarbures dudit condenseur ;
une septième conduite (377) branchée entre le raccordement de sortie (394) du liquide de barrage dudit séparateur et le raccordement d'entrée (378) du liquide de barrage de ladite pompe à liquide de barrage ;
un moyen (401) pour le refroidissement du liquide de barrage disposé dans ladite septième conduite ; et
une huitième conduite branchée entre le raccordement d'entrée des hydrocarbures condensés dudit séparateur et le raccordement de sortie desdits hydrocarbures liquides dudit condenseur ;
une autre conduite (420) branchée sur ledit raccordement de sortie (396) des hydrocarbures condensés dudit séparateur et sur le raccordement d'entrée (412) des hydrocarbures condensés dudit condenseur ;
une pompe (423) disposée dans ladite autre conduite ; et
un moyen (425) pour le refroidissement des hydrocarbures condensés, disposé dans ladite autre conduite.
